(19) Europäisches Patentamt
European Patent Office
Office européen des brevets

(11) **EP 3 296 762 A1**

(12) **EUROPEAN PATENT APPLICATION**
published in accordance with Art. 153(4) EPC

(43) Date of publication:
**21.03.2018 Bulletin 2018/12**

(51) Int Cl.:
**G01S 13/93** (2006.01)  **B60R 21/00** (2006.01)
**G08G 1/16** (2006.01)

(21) Application number: **16792348.1**

(22) Date of filing: **21.04.2016**

(86) International application number:
**PCT/JP2016/002138**

(87) International publication number:
**WO 2016/181618 (17.11.2016 Gazette 2016/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.05.2015 JP 2015096594**

(71) Applicant: **Panasonic Intellectual Property Management Co., Ltd.**
**Osaka-shi, Osaka 540-6207 (JP)**

(72) Inventors:
• **KOBAYASHI, Kiyotaka**
**Osaka-shi,**
**Osaka 540-6207 (JP)**
• **HAMADA, Asako**
**Osaka-shi,**
**Osaka 540-6207 (JP)**
• **NISHIMURA, Hirofumi**
**Osaka-shi,**
**Osaka 540-6207 (JP)**

(74) Representative: **Grünecker Patent- und Rechtsanwälte**
**PartG mbB**
**Leopoldstraße 4**
**80802 München (DE)**

(54) **MONITORED AREA SETTING DEVICE AND MONITORED AREA SETTING METHOD**

(57)    A monitoring-target-region setting device includes an object detector that detects objects present around an own vehicle, a scene discriminator that discriminates on the basis of position information of the own vehicle and map information around the own vehicle whether the own vehicle is located near a place where an assumed blind spot region is present, a monitoring region setter that sets, when the scene discriminator discriminates that the own vehicle is located near the place, while the own vehicle passes near the place, a region including at least the assumed blind spot region when viewed from the own vehicle as a monitoring region where alarm is performed when objects are detected, and an object selector that selects, in the monitoring region, according to whether the detected objects satisfy the determined condition, whether the detected objects are set as a target for which alarm is performed.

FIG. 1

## Description

Technical Field

The present invention relates to a monitoring-target-region setting device and a monitoring-target-region setting method that can set a detection range (a monitoring target region set) in which an object around a vehicle is detected.

Background Art

In Patent Literature 1, an object detecting device detects an object present around a vehicle using an ultrasonic wave, a radio wave, or the like and, when an object is detected, for example, during traveling of the vehicle, emits a warning to a driver and, in order to avoid collision of the vehicle and the object, automatically controls driving of the vehicle to thereby improve safety. However, in the conventional object detecting device, when many objects are detected in a detection range, a processing load in the object detecting device increases and a delay occurs in a detection time of the object.

Therefore, for example, the conventional object detecting device disclosed in Patent Literature 1 sets an object detection range as appropriate according to present vehicle speed and a present steering angle to thereby reduce the processing load and solve the delay of the detection time of the object.

Citation List

Patent Literature

PTL 1: Japanese Unexamined Patent Application Publication No. 2009-58316

Summary of Invention

The object detecting device disclosed in Patent Literature 1 can set a relative object detection range based on a moving vehicle. However, it is difficult to follow and set a specific region in which a positional relation with the vehicle changes according to the movement of the vehicle. The specific region is, for example, a region that is hard to see because of an oncoming right turning car during right turn waiting in an intersection, a region including a blind spot at a right turning destination or a left turning destination when making a right turn or a left turn in a T junction, and a region including a blind spot of an own vehicle driver assumed in advance (an assumed blind spot region). It is assumed that a probability that an accident can be prevented is improved by continuously monitoring such a specific region. However, since the specific region is present in a regular position irrespective of the behavior of the vehicle, it is difficult for the object detecting device mounted on the vehicle to continue to monitor the specific region.

One non-limiting and exemplary embodiment provides a monitoring-target-region setting device and a monitoring-target-region setting method that can continuously monitor an assumed blind spot region.

In one general aspect, the techniques disclosed here feature a monitoring-target-region setting device including: an object detector that detects one or more objects present around an own vehicle; a discriminator that discriminates, on the basis of position information of the own vehicle accumulated in every determined cycle, whether the own vehicle is located within a determined distance range from an assumed region; a monitoring-target-region setter that sets, when the own vehicle is located within the determined distance range, a monitoring target region including the assumed region and being updated according to the position information of the own vehicle; and an object selector that selects, whether the one or more objects detected in the monitoring target region are set as a target for which alarm is performed.

It should be noted that general or specific embodiments may be implemented as a system, a method, an integrated circuit, a computer program, a storage medium, or any selective combination thereof.

According to the present disclosure, it is possible to continuously monitor the assumed blind spot region. Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages. Brief Description of Drawings

[Fig. 1] Fig. 1 is a block diagram showing a configuration example of a monitoring-target-region setting device according to an embodiment of the present disclosure.

[Fig. 2] Fig. 2 is a diagram showing an example of an object detection region by an object detector.

[Fig. 3] Fig. 3 is diagram showing specific examples of an assumed blind spot region.

[Fig. 4] Fig. 4 is a diagram for explaining reference time.

[Fig. 5] Fig. 5 is a diagram for explaining selection of an object by an intra-assumed-blind-spot-region-object selector.

[Fig. 6] Fig. 6 is a flowchart for explaining an operation example of the monitoring-target-region setting device.

[Fig. 7] Fig. 7 is a flowchart for explaining an operation example of reference time setting processing by a reference time setter.

[Fig. 8] Fig. 8 is diagram for explaining specific examples of a monitoring target region.

[Fig. 9] Fig. 9 is a diagram showing a state in which monitoring target region at respective times are plotted on a coordinate system in which an own vehicle at the reference time is set as an origin.

[Fig. 10] Fig. 10 is a flowchart for explaining an operation example of monitoring target region setting processing by a monitoring-target-region setter.

[Fig. 11] Fig. 11 is a block diagram showing another configuration example of the monitoring-target-region setting device according to the embodiment of the present disclosure.

Description of Embodiments

An embodiment of the present disclosure is explained in detail below.

<Configuration of a monitoring-target-region setting device 100>

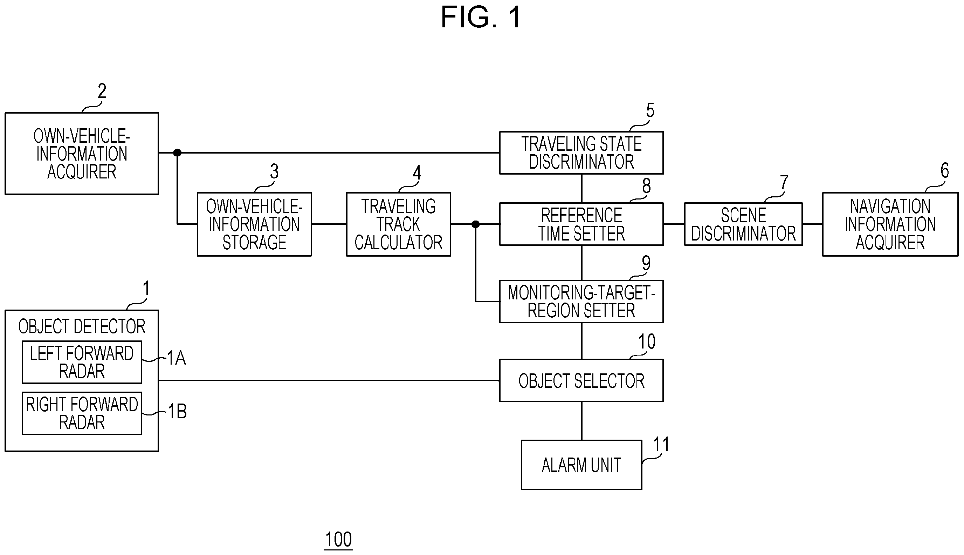

Fig. 1 is a block diagram showing a configuration example of a monitoring-target-region setting device 100 according to an embodiment of the present disclosure. The monitoring-target-region setting device 100 is mounted on, for example, a vehicle. Note that solid lines in the figure indicate a flow of main information by wired or wireless transmission.

In Fig. 1, the monitoring-target-region setting device 100 includes an object detector 1, an own-vehicle-information acquirer 2, an own-vehicle-information storage 3, a traveling track calculator 4, a traveling state discriminator 5, a navigation information acquirer 6, a scene discriminator 7, a reference time setter 8, a monitoring-target-region setter 9, an object selector 10, and an alarm unit 11.

The object detector 1 is a millimeter-wave radar that, for example, transmits and receives a radio wave to detect a distance and an azimuth from a front or a side of a vehicle to an object that reflects the radio wave, relative speed of the vehicle, and the like. The object detector 1 is desirably set near both side surfaces in the front of the vehicle, that is, for example, near a headlight. In Fig. 1, the object detector 1 includes a left forward radar 1A, a detection range of which is a left forward direction of the vehicle, and a right forward radar 1B, a detection range of which is a right forward direction of the vehicle. Note that, in this embodiment, the millimeter-wave radar is used as the object detector 1. However, the object detector of the present disclosure is not limited to this. For example, a laser radar that uses an infrared ray, a sonar that uses an ultrasonic wave, a monocular or stereo camera, and the like may be adopted.

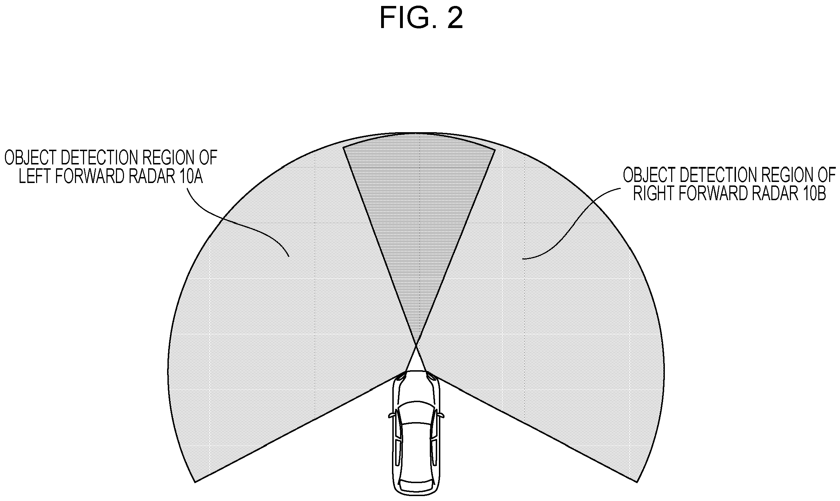

Fig. 2 is a diagram showing an example of an object detection region by the object detector 1. The left forward radar 1A and the right forward radar 1B are respectively set in, for example, the rear sides of a left side portion and a right side portion of a front bumper, body portions, or the like. Detection regions of the left forward radar 1A and the right forward radar 1B are a left side direction from the left obliquely right of the own vehicle and a right side direction from the right obliquely front of the own vehicle. In Fig. 2, the object detector 1 detects objects in a wide range in the front and the sides of the own vehicle.

The object detector 1 detects an object on the basis of outputs from the left forward radar 1A and the right forward radar 1B and outputs the position, the size, and the like of the object as object information. The object includes a vehicle preceding the own vehicle, a vehicle traveling on an adjacent lane, an oncoming vehicle, a parked vehicle, a motorcycle, a bicycle, and a pedestrian.

The own-vehicle-information acquirer 2 acquires speed information indicating the speed of the own vehicle, steering angle information indicating a steering angle, which is a turning angle of a not-shown steering wheel, and information concerning the own vehicle including turning speed information indicating turning speed of the own vehicle (hereinafter referred to as own vehicle information). The own-vehicle-information acquirer 2 acquires the information concerning the own vehicle from sensors for information acquisition (not shown in the figure) in the own vehicle, for example, a vehicle speed sensor attached to a wheel or an axle and a steering angle sensor that detects a rotation angle of the steering wheel.

The own-vehicle-information storage 3 stores, for a fixed time, the information concerning the own vehicle acquired by the own-vehicle-information acquirer 2 and outputs the information concerning the own vehicle at every fixed cycle or in response to an output instruction by another component of the monitoring-target-region setting device 100. The own-vehicle-information storage 3 is, for example, a register or a RAM.

The traveling track calculator 4 calculates a moving distance, a moving direction, and the like for each one frame of the own vehicle on the basis of the own vehicle information output by the own-vehicle-information storage 3 and generates traveling track information, which is information concerning a track of traveling of the own vehicle. The frame is a time frame of each unit time. The unit time is, for example, a radar transmission/reception cycle of the object detector 1. That is, when the radar transmission/reception cycle is 1/10 second, frames are respectively time frames having a time width of 1/10 second. Details concerning generation processing of traveling track information by the traveling track calculator 4 are explained below.

The traveling state discriminator 5 discriminates a traveling state of the own vehicle on the basis of a change in the own vehicle information output by the own-vehicle-information acquirer 2 and generates traveling state information. The traveling state information generated by the traveling state discriminator 5 is, for example, information indicating at least one of a state of any one of deceleration, acceleration, stop, and others of the own vehicle and a state of any one of straight advance, right turn, left turn, backward movement, and others of the own vehicle.

The navigation information acquirer 6 is, for example, a car navigation device and acquires navigation information including information concerning a present position (latitude, longitude, etc.) of the own vehicle and map information. As a method in which the navigation information acquirer 6 acquires various kinds of information, it is sufficient to adopt various methods such as a method of acquiring information from a public communication network such as the Internet via wireless communication and a method of storing the navigation information and the like in a not-shown memory or the like in advance and reading out necessary information at any time. In particular, the information concerning the present position of the own vehicle only has to be acquired by performing communication with GPS (Global Positioning System) satellites using a not-shown GPS device.

The navigation information acquirer 6 generates, in response to a request of the scene discriminator 7 explained below, information concerning the present position of the own vehicle and navigation information including map information. The map information includes, for example, information concerning roads, specifically, information indicating positions, names, and shapes of roads and intersections.

The scene discriminator 7 discriminates, on the basis of the navigation information generated by the navigation information acquirer 6, a scene in which the own vehicle is currently placed. More specifically, the scene discriminator 7 plots the present position of the own vehicle on a map on the basis of information concerning the present position (latitude, longitude, etc.) of the own vehicle and information concerning maps in the navigation information and discriminates, on the basis of the position of the own vehicle on the map, a situation in which the own vehicle is placed. Specifically, for example, the scene discriminator 7 discriminates that the own vehicle is "traveling" when the own vehicle is present in a road other than an intersection on the map, discriminates that the own vehicle is "parking" when the own vehicle is present outside a road, and discriminates that the own vehicle is "near an intersection" when the own vehicle is present on a road near an intersection.

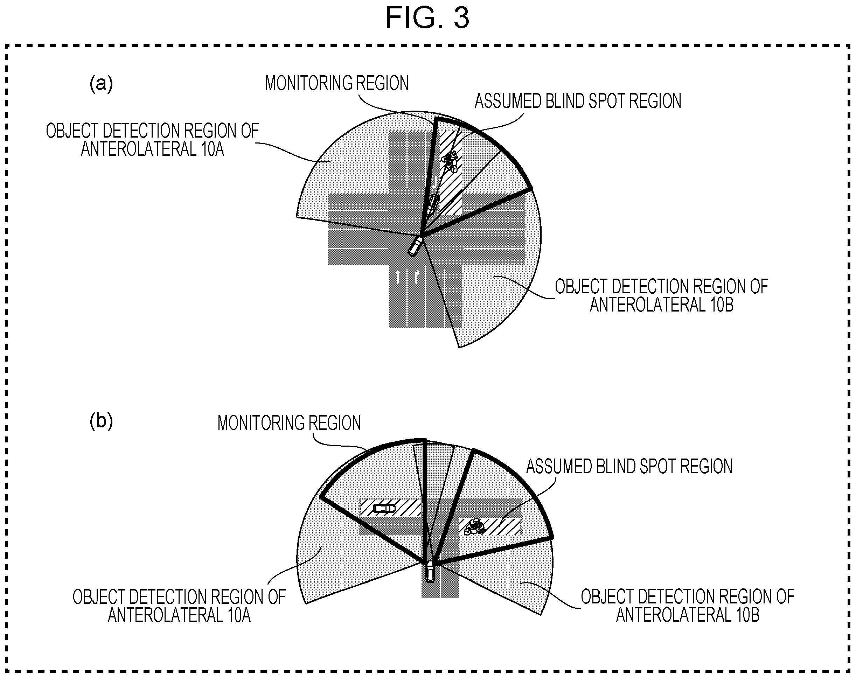

When the own vehicle travels near an intersection, the monitoring-target-region setting device 100 sets, as a specific region where object detection by the object detector 1 is intensively performed, a region including a blind spot of an own vehicle driver assumed in advance. In the following explanation such a region is referred to as assumed blind spot region. Fig. 3 is diagram showing specific examples of the assumed blind spot region. Note that the assumed blind spot region is a region that does not depend on presence or absence of an oncoming car.

Fig. 3(a) shows a scene in which the own vehicle is making a right turn in a crossroads and an oncoming car waiting for a right turn is present. A sight of the driver of the own vehicle is blocked by the oncoming right turning car. Therefore, since an object (for example, an oncoming car advancing straight) hidden by the right turning car is present in the assumed blind spot region, the object is less easily recognized by the driver of the own vehicle.

Fig. 3(b) shows a scene in which the own vehicle is making a right turn or making a left turn in a T junction with low visibility. A region at a right turn destination or a left turn destination is a blind spot for the driver before the right turn or the left turn. Therefore, an object in the assumed blind spot region is less easily recognized by the driver.

The assumed blind spot region is a region assumed to be a blind spot for the driver of the own vehicle, for example, near an intersection. Therefore, when an object, for example, another vehicle is present in the assumed blind spot region, it is difficult for the driver to recognize the presence of the object. Therefore, it is highly likely that contact or collision with the own vehicle passing through the intersection occurs. In other words, by monitoring the assumed blind spot region with the object detector 1 to detect the object in the assumed blind spot region until the own vehicle finishes turning the intersection, it can be expected that the own vehicle safely passes even near the assumed blind spot region. Therefore, the monitoring-target-region setting device 100 in this embodiment performs effective monitoring by including the assumed blind spot region in a monitoring target region of the object detector 1 and performing object detection in the monitoring target region of the object detector 1.

In detecting a scene in which the own vehicle is currently placed, the scene discriminator 7 discriminates on the basis of present position information of the own vehicle and map information around the own vehicle whether the own vehicle is located within a determined distance range from the assumed blind spot region. Specifically, the scene discriminator 7 only has to discriminate, for example, according to whether the own vehicle is located within a determined distance range from the intersection, whether the own vehicle is located within the determined distance range from the assumed blind spot region. Note that, for example, in the case of the assumed blind spot region present in the intersection, the determined distance range is a range including the intersection where the own vehicle is present.

Since the assumed blind spot region is a region assumed to be a blind spot for the driver of the own vehicle, for example, the position of the assumed blind spot region in the intersection is discriminated by the shape of the intersection. Therefore, information concerning the position of the assumed blind spot region, for example, information concerning latitude, longitude, and the like and the shape of the assumed blind spot region only has to be included in, for example, map information acquired from the navigation information acquirer 6 in advance.

Incidentally, in order to continuously monitor the monitoring target region including the assumed blind spot region with the object detector 1, the monitoring-target-region setting device 100 may acquire relative position information based on the own vehicle other than, so to speak, absolute position information such as the latitude, the longitude, and the like of the assumed blind spot region. In order to continuously monitor the assumed blind sport region while the own vehicle passes within the determined distance range from the assumed blind spot region, that is, passes in the intersection, the monitoring-target-region setting device 100 may detect that the own vehicle enters the intersection.

The monitoring-target-region setting device 100 in this embodiment uses various kinds of information described below in order to detect that the own vehicle enters the intersection and acquire relative position information of the assumed blind spot region. The various kinds of information are at least one of the own vehicle information stored by the own-vehicle-information storage 3, the traveling track information generated by the traveling track calculator 4, and the traveling state information discriminated by the traveling state discriminator 5. The monitoring-target-region setting device 100 tracks, using the various kinds of information, the behavior of the own vehicle retroactively from the past and detects that the own vehicle enters the intersection. The monitoring-target-region setting device 100 sets, as a reference position, the position of the own vehicle at a point in time when the own vehicle enters the intersection and calculates relative position information of the assumed blind spot region on the basis of the reference position.

Specifically, for example, in the scene of the right turn waiting in the intersection shown in Fig. 3(a), the own vehicle is in a standby state in a period until the own vehicle enters a right turn lane and starts a right turn. Therefore, the monitoring-target-region setting device 100 recognizes, as the point in time when the own vehicle enters the intersection, for example, a point in time when the own vehicle starts to curve from a straight advance state and sets, as the reference position, a position where the own vehicle starts to curve from the straight advance state. Alternatively, for example, in the scene in which the own vehicle makes a right turn or a left turn in the T junction shown in Fig. 3(b), the monitoring-target-region setting device 100 recognizes, as the point in time when the own vehicle enters the intersection, a point in time when the own vehicle temporarily stops before the right turn or the left turn and sets, as the reference position, a position where the own vehicle temporarily stops.

The monitoring-target-region setting device 100 in this embodiment determines, with the reference time setter 8 and the monitoring-target-region setter 9 explained below, whether the own vehicle enters the determined distance range from the assumed blind spot region, that is, the intersection and performs processing for calculating relative position information based on the own vehicle in the assumed blind spot region. Detailed operations of the reference time setter 8 and the monitoring-target-region setter 9 are explained below.

The reference time setter 8 extracts, on the basis of the traveling track information generated by the traveling track calculator 4, time when the own vehicle enters the intersection and sets the time as reference time $t_0$.

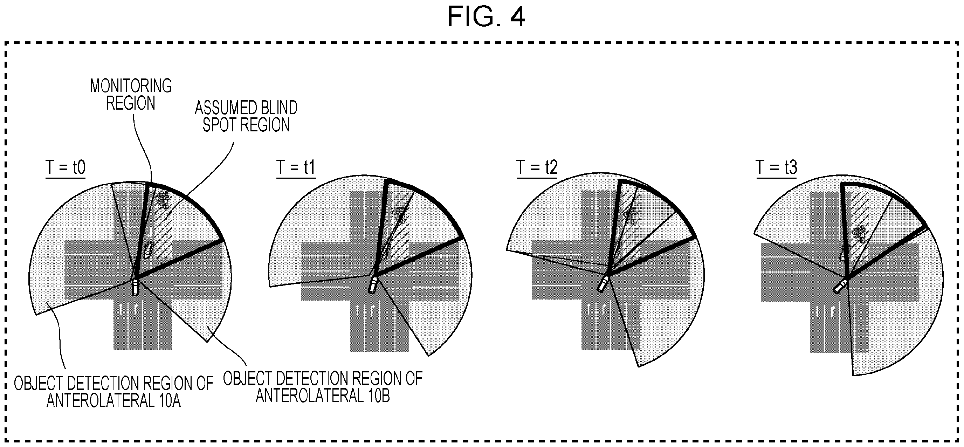

Fig. 4 is a diagram for explaining the reference time to. Fig. 4 shows the position of the own vehicle making a right turn in a crossroads and an elapsed time. As shown in Fig. 4, the own vehicle is in the straight advance state at $T=t_0$ and gradually advances to the right direction as time elapses from $T=t_1$ to $T=t_3$.

The reference time $t_0$ is detected by the reference time setter 8, whereby the monitoring-target-region setting device 100 can set, as the reference position, the position of the own vehicle at the reference time $t_0$ and specify a relative position of the assumed blind spot region in the own vehicle at present of the assumed blind spot region (for example, $T=t_3$). Details of a method of specifying the relative position of the assumed blind spot region are explained below.

The monitoring-target-region setter 9 sets a target region of monitoring by the object detector 1, that is, a monitoring target region including the assumed blind spot region. For example, in Figs. 3(a) and 3(b), the monitoring-target-region setter 9 sets, as the monitoring target region, a range including the assumed blind spot region in the object detection range of the object detector 1. Details of a monitoring-target-region setting method of the monitoring-target-region setter 9 are explained below.

The object selector 10 determines whether an object is present in the monitoring target region among objects detected by the object detector 1. When a plurality of objects are present in the monitoring target region, the object selector 10 selects an object for which an alarm is emitted to the driver. Criteria (determined conditions) of the selection by the object selector 10 are not limited in particular in this embodiment. However, the object selector 10 may select, for example, according to the positions of the objects and relative speeds to the own vehicle, an object most likely to collide with the own vehicle. Alternatively, the object selector 10 may select all of the objects detected in the assumed blind spot region.

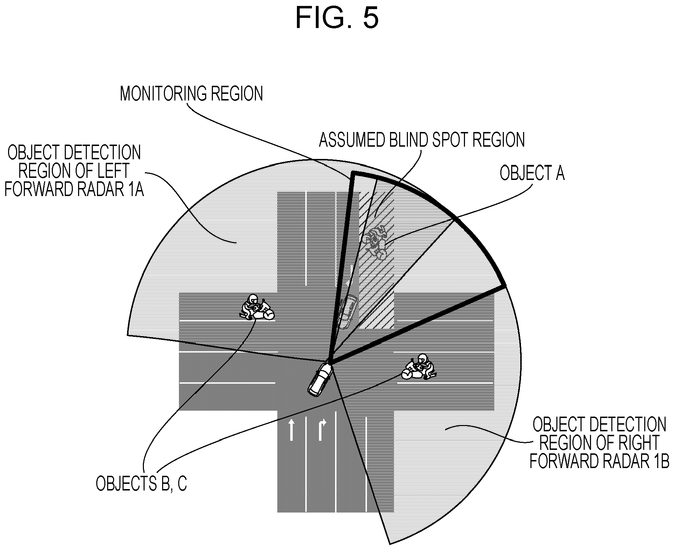

Fig. 5 is a diagram for explaining the selection of an object by the object selector 10. In Fig. 5, a state in which the own vehicle makes a right turn is shown. In Fig. 5, an assumed blind spot region is present behind a right turning car opposed to the own vehicle. For example, an object A such as a motorcycle advancing straight in an oncoming car lane is present in the assumed blind spot region. Objects B and C are present outside the assumed blind spot region, that is, a region that is clearly not a blind spot of the driver. In Fig. 5, the object selector 10 does not set the objects B and C as a target of an alarm and sets the object A as a target of an alarm. Consequently, the object detector 1 can reduce an operation load due to the object detection processing. When objects other than the object A are present in the assumed blind spot region, the object selector 10 may calculate times until collision with the own vehicle from moving speeds and moving directions of the objects and set, as a target of an alarm, the object having high likelihood of collision.

The alarm unit 11 performs alarm concerning the object selected by the object selector 10. A method of the alarm by the alarm unit 11 is not particularly limited in this embodiment. However, for example, the alarm unit 11 performs the alarm with flashing or lighting of an alarm lamp attached to a meter panel, a center console, a dashboard, or the like of the own vehicle in advance, warning sound from a speaker, or the like.

<Operation of the monitoring-target-region setting device 100>

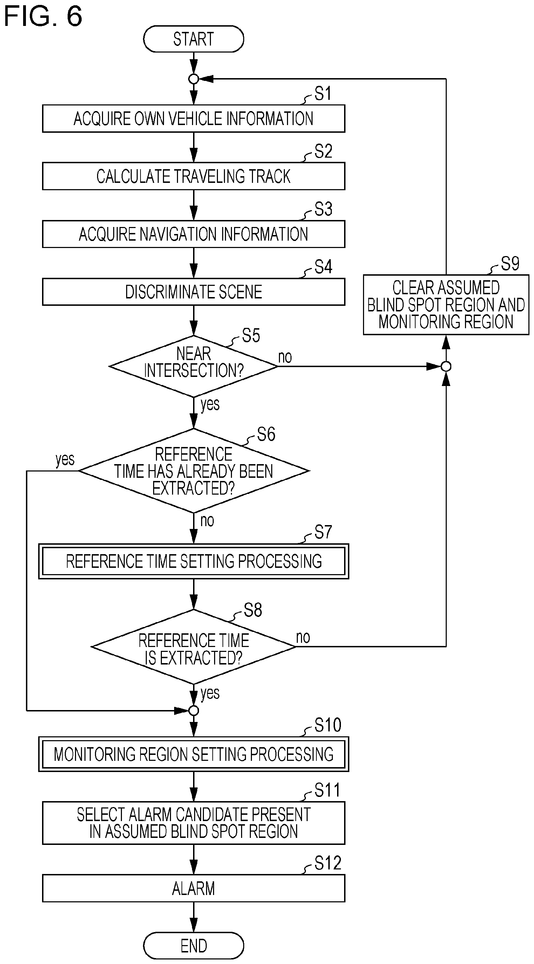

An operation example of the monitoring-target-region setting device 100 is explained. Fig. 6 is a flowchart showing the operation example of the monitoring-target-region setting device 100.

In step S1, the traveling track calculator 4 acquires own vehicle information including speed information concerning speed of the own vehicle, steering angle information indicating a turning angle of the steering wheel, and turning speed information indicating turning speed, from the own-vehicle-information storage 3. Note that, in monitoring-target-region setting device 100, the own vehicle information is acquired by the own-vehicle-information acquirer 2 at any time and stored in the own-vehicle-information storage 3.

In step S2, the traveling track calculator 4 calculates a difference of position information from the preceding frame on the basis of the own vehicle information acquired in step S1 to thereby perform track information generation processing for generating traveling track information. Details concerning the traveling track information generation processing are explained below.

In step S3, the scene discriminator 7 acquires navigation information generated by the navigation information acquirer 6. Note that, in the monitoring-target-region setting device 100, the navigation information is acquired at any time by the navigation information acquirer 6 and output to the scene discriminator 7.

In step S4, the scene discriminator 7 performs discrimination of a scene in which the own vehicle is placed, that is, scene discrimination on the basis of the navigation information acquired in step S3.

In step S5, the scene discriminator 7 determines whether the own vehicle is located "in an intersection", which is in a determined distance range from an assumed blind spot region, as a result of the discrimination in step S4. When it is determined that the own vehicle is "in the intersection", the flow proceeds to step S6. When the own vehicle is outside the intersection, the flow proceeds to step S9.

In step S6, it is determined whether the reference time $t_0$ has already been extracted by the reference time setter 8. When the reference time $t_0$ has not been extracted yet, the flow proceeds to step S7. When the reference time $t_0$ has been extracted, the flow proceeds to step S10.

In step S7, the reference time setter 8 performs reference time extraction processing for extracting the reference time $t_0$. Details of the reference time extraction processing by the reference time setter 8 are explained below.

In step S8, it is determined whether the reference time $t_0$ is extracted by the reference time setter 8. When the reference time $t_0$ is not extracted in step S8, the flow proceeds to step S9. When the reference time $t_0$ is extracted, the flow proceeds to step S10.

Step S9 is performed when it is determined in step S5 that the own vehicle is not located "in the intersection" or when it is determined in step S8 that the reference frame is not extracted in the reference time extraction processing in step S7. In such a case, in step S9, the monitoring-target-region setting device 100 determines that a monitoring target region that should be intensively monitored is absent, ends the processing, and returns to step S1.

In step S10, the monitoring-target-region setter 9 specifies, on the basis of the reference time $t_0$ extracted before step S8, a relative position of the assumed blind spot region based on the own vehicle and performs monitoring target region setting processing for setting a monitoring target region including the assumed blind spot region. Details of the monitoring target region setting processing are explained below.

In step S11, the object selector 10 determines whether objects are present in the monitoring target region set by the monitoring-target-region setter 9 and, when objects are present, selects an object for which alarm is performed.

In step S12, the alarm unit 11 emits an alarm to inform the driver of the own vehicle that the object is present in the assumed blind spot region including a blind spot of the driver. Consequently, it is possible to call the driver's attention to the blind spot and reduce the likelihood of occurrence of an accident.

<Generation processing of traveling track information>

Generation processing of traveling track information by the traveling track calculator 4 is explained. In the following explanation, own vehicle information at time $t_n$ includes vehicle speed: $v_n$ [m/s], a steering angle: $\theta_n$ [rad], and turning speed: $\omega_n$ [rad/s]. Note that n is an integer equal to or larger than 1 and means an n-th frame from certain time serving as a reference (the reference time $t_0$).

When a coordinate system in which a position $(x_0, y_0)$ of the own vehicle at the reference time $t_0$ is set as a reference (an origin) is assumed, the position of the own vehicle at time $t_n$ is defined as a relative position $(x_n, y_n)$, and an azimuth angel (a relative azimuth) of the own vehicle based on the origin is defined as αn. A relative position $(x_{n+1}, y_{n+1})$ and a relative azimuth of the own vehicle at time $t_{n+1}$ can be represented using the following Expressions (1) to (3).

[Math. 1]

$$x_{n+1} = x_n + v_n \cdot \Delta t_n \cdot \cos(\alpha_n + \theta_n)$$

[Math. 2]

$$y_{n+1} = y_n + v_n \cdot \Delta t_n \cdot \sin(\alpha_n + \theta_n)$$

[Math. 3]

$$\alpha_{n+1} = \alpha_n + \omega_n \cdot \Delta t_n$$

In the above expressions, $\Delta t_n$ is given by the following Expression (4).

[Math. 4]

$$\Delta t_n = t_{n+1} - t_n$$

The traveling track calculator 4 calculates a moving distance and a moving azimuth in an n+1 frame on the basis of a difference between the calculated relative position ($x_{n+1}$, $y_{n+1}$) of the own vehicle and the relative position ($x_n$, $y_n$).

<Reference time setting processing>

Reference time setting processing by the reference time setter 8 is explained. As explained above, the reference time $t_0$ is the time when the own vehicle is present in the position ($x_0$, $y_0$) serving as a reference of a relative position of the own vehicle at time $t_n$. In this embodiment, as explained above, when the own vehicle is currently turning an intersection, the reference time $t_0$ is a last frame in which the own vehicle advanced straight in the past. Therefore, in the reference time setting processing in this embodiment, first, it is determined whether the own vehicle is currently turning the intersection.

The reference time setter 8 determines on the basis of steering angle information in the own vehicle information stored in the own-vehicle-information storage 3 whether the own vehicle is currently turning the intersection. Specifically, when a present steering angle is equal to or larger a determined angle and the present steering angle continues for a determined time (frame) or more, the reference time setter 8 determines that the own vehicle is currently turning the intersection. When determining that the own vehicle is not currently turning the intersection, since the reference time setter 8 does not set the reference time $t_0$, the reference time setter 8 ends the processing (proceeds to step S9 shown in Fig. 4).

When determining that the own vehicle is currently turning the intersection, the reference time setter 8 specifies, on the basis of the own vehicle information stored in the own-vehicle information storage 3 and the traveling track information output by the traveling track calculator 4, a last frame in which the own vehicle advanced straight and sets time of the frame as the reference time $t_0$.

For example, in Fig. 4, when $t_3$ is present time and the reference time setter 8 determines that the own vehicle is turning in the intersection at $T = t_3$, the reference time setter 8 refers to own vehicle information and traveling track information in the past and specifies a last frame in which the own vehicle advanced straight. In Fig. 4, since $T = t0$ is the last frame in which the own vehicle advanced straight, the reference time setter 8 sets time of a frame at $T = t0$ as the reference time $t_0$.

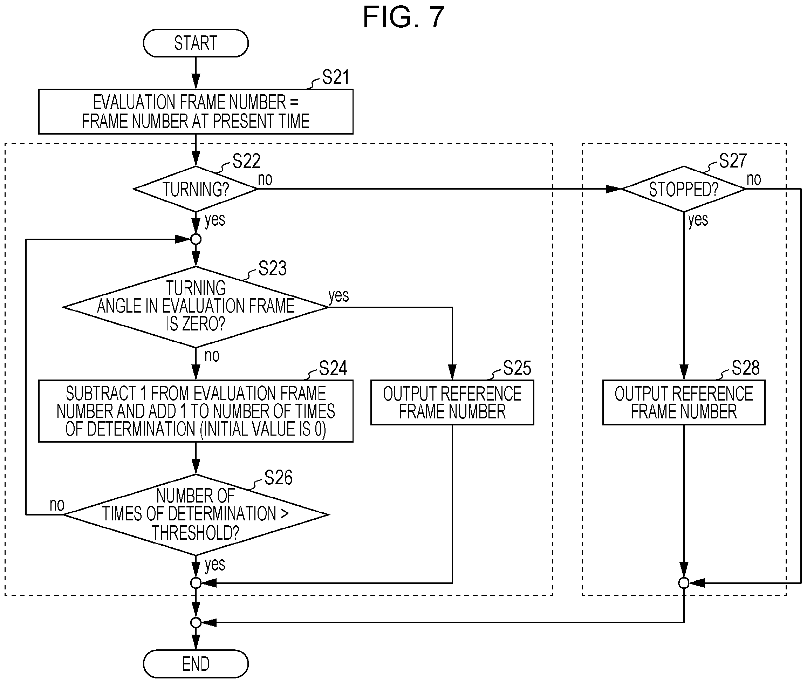

Fig. 7 is a flowchart for explaining an operation example of the reference time setting processing by the reference time setter 8. In step S21, the reference time setter 8 sets an evaluation frame number # as a frame of present time. That is, the reference time setter 8 sets the frame of the present time as an initial value of an evaluation target frame. Note that the evaluation frame number # is a parameter indicating a frame set as an evaluation target.

In step S22, the reference time setter 8 determines whether the own vehicle is turning. As explained above, the determination by the reference time setter 8 is performed on the basis of the own vehicle information stored in the own-vehicle-information storage 3 and the traveling track information output by the traveling track calculator 4. When it is determined that the own vehicle is turning, the flow proceeds to step S23. When it is determined that the own vehicle is not turning, the flow proceeds to step S27.

When it is determined in step S22 that own vehicle is turning, it is possible to determine that the own vehicle is turning in the intersection, that is, making a right turn or a left turn. This is because step S22 is step S7 after it is determined in step S5 in Fig. 6 that the own vehicle is near the intersection.

Subsequently, in step S23, the reference time setter 8 determines whether the behavior of the own vehicle in the evaluation frame is the straight advance. When it is determined that the own vehicle is not advancing straight in the evaluation frame, that is, the own vehicle is turning in the intersection, the flow proceeds to step S24. When it is determined that the own vehicle is advancing straight, the flow proceeds to step S25.

When the behavior of the own vehicle is not the straight advance in the evaluation frame in step S23, in step S24, the reference time setter 8 subtracts 1 from the evaluation frame number # and adds 1 to the number of times of determination N. When the reference time $t_0$ is set, the number of times of determination N is a parameter indicating the number of times (the number of frames) of tracing back from the present time.

On the other hand, when the behavior of the own vehicle in the evaluation frame is the straight advance in the evaluation frame in step S23, in step S25, the reference time setter 8 determines that the evaluation frame is a reference frame and sets the frame number to 0. The reference time setter 8 specifies the frame as a last frame in which the own vehicle advanced straight and sets time of the frame as the reference time $t_0$.

That is, in steps S23 to S25, the reference time setter 8 extracts frames in which the own vehicle advanced straight while tracing back frames one by one from the present time. Consequently, the reference time setter 8 can specify the reference frame and set the reference time $t_0$.

Note that, in step S26, the reference time setter 8 determines whether the number of times of determination N, to which 1 is added in step S24, exceeds a determined threshold. When the number of times N exceeds the determined threshold, that is, when a frame in which the own vehicle advances straight is absent even if frames equivalent to the thresholds are traced back, since the reference time setter 8 does not set the reference time $t_0$, the reference time setter 8 ends the processing. When the number of times N does not exceed the determined threshold even if 1 is added in step S24, the reference time setter 8 returns to step S23 and searches for the reference frame again.

Subsequently, in step S27, the reference time setter 8 determines whether the own vehicle is stopped. A state in which the own vehicle is stopped near the intersection is, for example, in Fig. 3(b), a state in which the own vehicle is temporarily stopped before making a right or left turn in the T junction. In the state in which the own vehicle is temporarily stopped, in Fig. 3(b), since an assumed blind spot region is present, the reference time setter 8 can determine, as the reference frame, a frame in which the own vehicle stops and set time of the frame as the reference time $t_0$. Therefore, when it is determined in step S27 that the own vehicle is stopped, the flow proceeds to step S28.

Note that, when it is determined in step S27 that the own vehicle is not stopped, since the own vehicle is neither turning nor stopped near the intersection, the reference time setter 8 determines that the own vehicle is located in a place where the assumed blind sport region including a blind spot of the driver is absent, for example, the own vehicle is advancing straight in the intersection. Therefore, when it is determined in step S27 that the own vehicle is not stopped, the reference time setter 8 ends the processing.

In step S28, the reference time setter 8 specifies a frame in which the own vehicle stopped, sets the frame as the reference frame, and sets time of the frame as the reference time $t_0$.

<Monitoring target region setting processing>

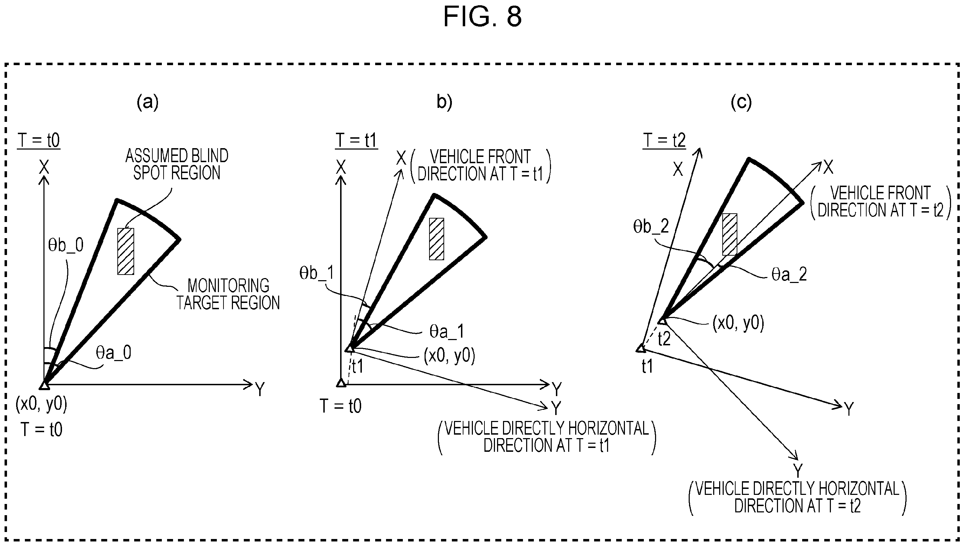

Monitoring target region setting processing in the monitoring-target-region setter 9 is explained. Fig. 8 is diagram for explaining specific examples of a monitoring target region. Fig. 8(a) is a diagram in which the position of the own vehicle at the reference time $t_0$ is set as a reference (an origin) and a monitoring target region including an assumed blind spot region is set. Specifically, Fig. 8(a) is a diagram in which the position of the own vehicle at the reference time $t_0$ and the position of the assumed blind spot region in the intersection, where the own vehicle is currently located, acquired in advance are plotted on the map information acquired from the navigation information acquirer 6. Note that, in Fig. 8(a), the vertical axis indicates a front direction of the own vehicle at the reference time $t_0$ and the horizontal axis indicates a directly horizontal direction of the own vehicle at the reference time $t_0$. The assumed blind spot region is a position determined by the shape of a road, that is, fixed by an absolute coordinate. The monitoring target region is a region obtained by adoptively setting a region including the assumed blind spot region according to movement of the own vehicle. A position of the monitoring target region in a relative coordinate changes.

The monitoring-target-region setter 9 sets, on the basis of a positional relation of the assumed blind spot region of the own vehicle shown in Fig. 8(a), the monitoring target region including the assumed blind spot region, for example, a fan-shaped monitoring target region centering on the position of the own vehicle. Since a reachable distance of a radio wave for a radar by the object detector 1 is determined in advance, a radius of a fan shape forming the monitoring target region in Fig. 8(a) is a fixed value. The monitoring-target-region setter 9 can specify the set monitoring target region by specifying an angle of the fan shape forming the monitoring target region, for example, angles $\theta_{a\_0}$ and $\theta_{b\_0}$ with respect to the front direction of the own vehicle.

Figs. 8(b) and 8(c) are respectively diagrams showing monitoring target regions at time $t_1$ and time $t_2$. At time $t_1$ and time $t_2$, since the own vehicle is moving (the own vehicle is turning in the intersection), a positional relation with the assumed blind spot region changes. At time $t_1$, an angle range of the monitoring target region including the assumed blind spot region is a range of $\theta_{a\_1}$ to $\theta_{b\_1}$ with respect to the front direction of the own vehicle. At time $t_2$, an angle range of the monitoring target region including the assumed blind spot region is a range of $\theta_{a\_2}$ to $\theta_{b\_2}$ with respect to the front direction of the own vehicle. In Figs. 8(a) to 8(c), the position of the own vehicle changes as time elapses. However, by performing coordinate conversion into the coordinate system in which the position ($x_0$, $y_0$) of the own vehicle at the reference time $t_0$ is set as the origin, it is possible to represent monitoring target regions at respective times using the positions of the own vehicle and angle ranges at the times.

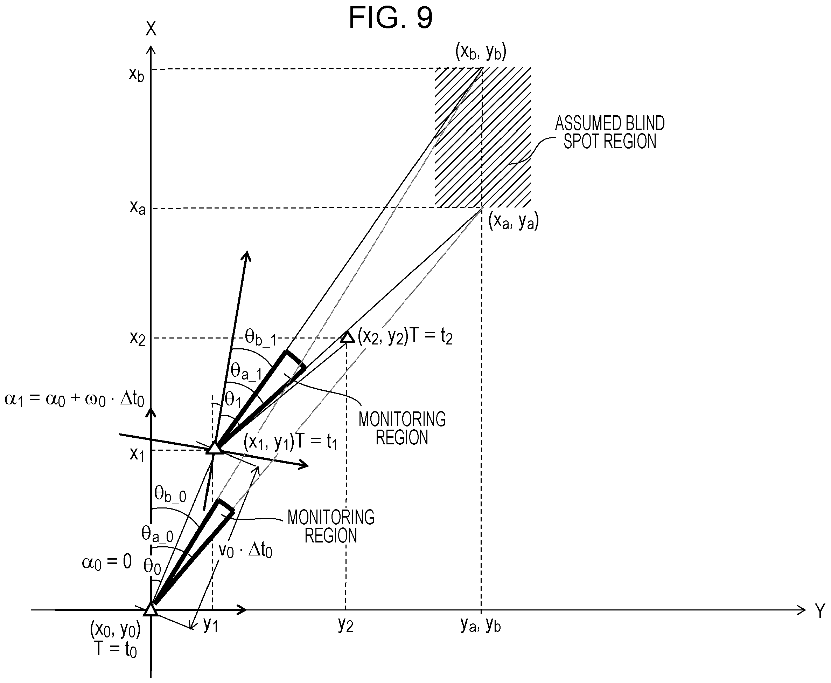

Fig. 9 is a diagram showing a state in which monitoring target regions at respective times are plotted on a coordinate system with the own vehicle at the reference time $t_0$ is set as an origin. An assumed blind spot region is a hatched range specified by points $(x_a, y_a)$ and $(x_b, y_b)$ in Fig. 9. In Fig. 9, for simplification, the assumed blind spot region is specified by the points $(x_a, y_a)$ and $(x_b, y_b)$, which are midpoints of two sides among four sides of the assumed blind spot region. However, the position of the assumed blind spot region may be indicated using coordinates of four corners of the assumed blind spot region.

The monitoring target regions in Fig. 8 at time $t_1$ and time $t_2$ include the assumed blind spot region. However, in Fig. 9, for simplification, the vicinity of the center of a fan shape forming the monitoring target region is shown. The other regions are omitted. This is because, as explained above, since the radius of the fan shape forming the monitoring target region is the fixed value, in Fig. 9, the center only has to be displayed in order to indicate the positions of the monitoring target regions at the times. Actually, the monitoring target regions at time $t_1$ and time $t_2$ shown in Fig. 9 are extended to the upper right direction and set to include the assumed blind spot region.

When an angle range of a monitoring target region in an n+1 frame is $\theta_{a\_n+1}$ to $\theta_{b\_n+1}$, the angle range can be represented as indicated by the following Expressions (5) and (6) using an angle range $\theta_{a\_n}$ to $\theta_{b\_n}$ in an n frame.

[Math. 5]

$$\theta_{a\_n+1}=\arctan((y_a-y_{n+1})/(x_a-x_{n+1}))-\alpha_{n+1}$$

[Math. 6]

$$\theta_{b\_n+1}=\arctan((y_b-y_{n+1})/(x_b-x_{n+1}))-\alpha_{n+1}$$

Note that the monitoring target region shown in Fig. 9 is an example of the monitoring target region in the case of the right turn in the crossroads shown in Fig. 3(a). However, for example, in the right or left turn in the T junction shown in Fig. 3(b), it is possible to set the monitoring target region including the assumed blind spot region according to the same idea as Fig. 9.

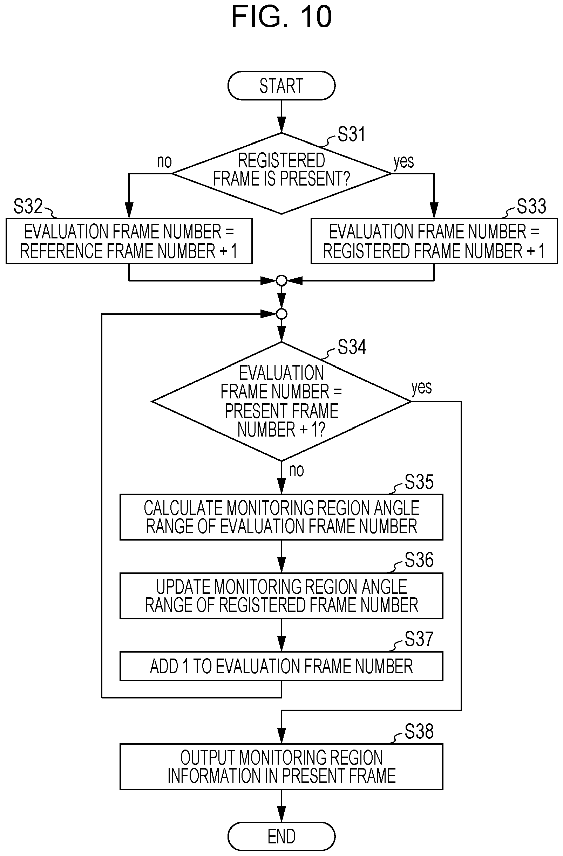

Fig. 10 is a flowchart for explaining an operation example of the monitoring target region setting processing by the monitoring-target-region setter 9. In step S31, the monitoring-target-region setter 9 determines whether a frame in which setting of a monitoring target region is completed is present. Note that, in the following explanation, the frame in which the setting of the monitoring target region is completed is referred to as registered frame. When the registered frame is absent, the flow proceeds to step S32. When the registered frame is present, the flow proceeds to step S33.

When the registered frame is absent, in step S32, the monitoring-target-region setter 9 sets the evaluation frame number # to a number obtained by adding 1 to the reference frame number, that is, 0 and proceeds to step S34.

On the other hand, when the registered frame is present, in step S33, the monitoring-target-region setter 9 sets the evaluation frame number # to a number obtained by adding 1 to the registered frame and proceeds to step S34.

That is, in steps S32 and S33, when the registered frame is absent, the monitoring-target-region setter 9 sets the next frame of the reference frame as the evaluation frame. When the registered frame is present, the monitoring-target-region setter 9 sets the next frame of the registered frame as the evaluation frame.

In step S34, the monitoring-target-region setter 9 determines whether the evaluation frame number # is a frame number obtained by adding 1 to a present frame number. That is, the monitoring-target-region setter 9 determines whether the present frame is set as an evaluation target frame. When the present frame is not set as the evaluation target yet, the flow proceeds to step S35. When the present frame is already set as the evaluation target, the flow proceeds to step S38.

When it is determined in step S34 that the present frame is not set as the evaluation target yet, in step S35, the monitoring-target-region setter 9 sets a monitoring target region in the evaluation frame. According to the method explained above in relation to Fig. 9, the monitoring-target-region setter 9 calculate an angle range for specifying the set monitoring target region.

In step S36, the monitoring-target-region setter 9 registers, as the registered frame, the evaluation target frame in which the monitoring target region is set in step S35 and performs update of an angle range for specifying the monitoring target region.

In step S37, the monitoring-target-region setter 9 adds 1 to the evaluation frame number # and returns to step S34. That is, the monitoring-target-region setter 9 proceeds to the monitoring target region setting processing of the next frame.

When it is determined in step S34 that the present frame is already set as the evaluation target, in step S38, the monitoring-target-region setter 9 outputs information concerning the monitoring target region including the angle range and the like of the monitoring target region in the present frame. Consequently, the monitoring target region in the present frame is set.

As explained above, the monitoring-target-region setting device 100 of the present disclosure includes the object detector 1 that detects objects present around the own vehicle, the scene discriminator 7 that discriminates on the basis of position information of the own vehicle and map information around the own vehicle whether the own vehicle is located within a determined range from the assumed blind spot region assumed to be a blind spot when viewed from the driver (a blind spot assumed region), the monitoring-target-region setter 9 that sets, while the own vehicle is located within the determined range from the assumed blind spot region, a region including at least the assumed blind spot region when viewed from the own vehicle as a monitoring target region in which alarm is performed when an object is detected, and the object selector 10 that determines whether an object detected by the object detector 1 in the monitoring target region set by the monitoring-target-region setter 9 satisfies a determined condition and selects, according to whether the object satisfies the determined condition, whether the object is set as a target for which alarm is performed.

The monitoring-target-region setting device 100 of the present disclosure includes the own-vehicle-information storage 3 that accumulates own vehicle information, which is information including moving speed and a moving direction of the own vehicle, at every fixed cycle and the reference time setter 8 that acquires information concerning the position of the assumed blind spot region and sets, as the reference time $t_0$, time when the own vehicle is present in a reference position in a scene in which the assumed blind spot region is present. The monitoring-target-region setter 9 calculates, on the basis of the own vehicle information acquired from the own-vehicle-information storage 3, a position of the own vehicle in every frame (determined cycle) from the reference time $T_0$ set by the reference time setter 8 and sets, as a monitoring target region, a region including at least the assumed blind spot region viewed from the position of the own vehicle in each frame.

With such a configuration, the monitoring-target-region setting device 100 of the present disclosure can continue to monitor the monitoring target region including the assumed blind spot region as a monitoring target of the object detector 1 while the own vehicle passes in the scene including the assumed blind spot region. When an object is present in the assumed blind spot region where likelihood of contact, collision, and the like with the own vehicle is high when an object is present, the monitoring-target-region setting device 100 can emit an alarm to the driver. In this way, since the region including the assumed blind spot region can be set as the object detection region and continuously monitor the region, the monitoring-target-region setting device 100 can reduce the likelihood of contact or collision of the own vehicle.

In this embodiment, a scene in which the scene discriminator 7 shown in Fig. 1 discriminates that the assumed blind spot region for the own vehicle is present is a scene in which the own vehicle is waiting for a right turn in an intersection of a crossroads and an oncoming right turning car is present. The assumed blind spot region in the scene is a region including a blind spot of the own vehicle driver caused by the right turning car opposed to the own vehicle.

In this embodiment, another scene in which the scene discriminator 7 shown in Fig. 1 discriminates that the assumed blind spot region for the own vehicle is present is a scene in which the own vehicle temporarily stops before making a right turn or a left turn in the intersection of the crossroads. The assumed blind spot region in the scene is an opposite lane after the right turn or the left turn.

Therefore, the monitoring-target-region setting device 100 shown in Fig. 1 can reduce the likelihood of contact and the like by continuously monitoring the region including the blind spot of the own vehicle driver in a scene in which a blind spot is present, for example, during a right turn in an intersection and during a right or left turn in a T junction.

Note that, in the embodiment explained above, as the determined distance range from the assumed blind spot region, an inside of an intersection where the own vehicle waits for a right turn when an oncoming right turning car is present or an inside of an intersection where the own vehicle temporarily stops before making a right turn or a left turn in a T junction. However, the present disclosure is not limited to this. Another range in which a region including a blind spot of the own vehicle driver is assumed in advance may be adopted. For example, other than the vicinity of the intersection, a region near an exit of a sharp curve where the exit cannot be seen, a region near a gateway of a tunnel continuing to a gentle curve, or a region where a blind spot of the driver is assumed to occur in advance may be set as the assumed blind spot region.

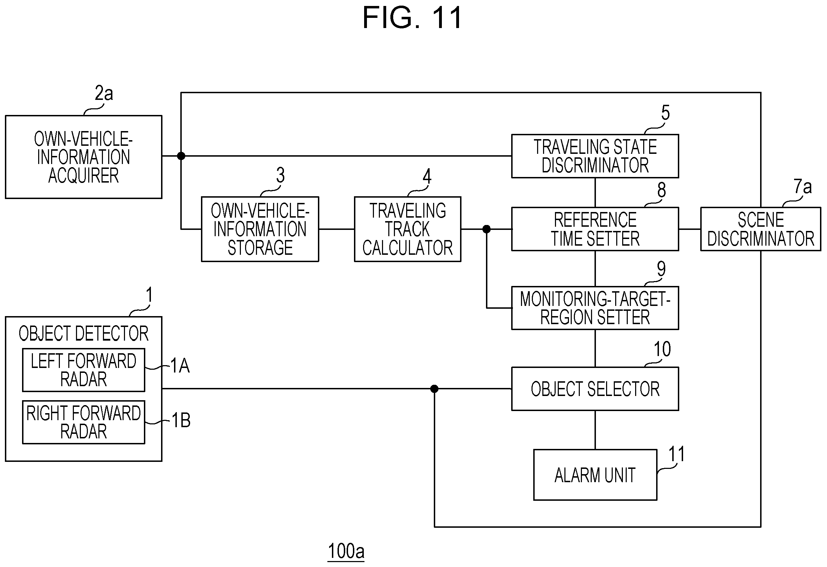

Note that, in the embodiment, the scene discriminator 7 discriminates, on the basis of the information concerning the present position (for example, at least one of latitude and longitude) of the own vehicle or the map information acquired by the navigation information acquirer 6 shown in Fig. 1, the scene in which the own vehicle is currently placed. However, the present disclosure is not limited to this. In Fig. 11, an own-vehicle-information acquirer 2a can include, as own vehicle information, for example, information (ON/OFF of indication to a left direction or a right direction) from a direction indicator. The own-vehicle-information acquirer 2a acquires the information concerning the own vehicle through an in-vehicle network (for example, CAN: Controller Area Network or FlexRay (registered trademark)) in which the information from the direction indicator is transmitted.

A scene determiner 7a shown in Fig. 11 may discriminate a scene in which the own vehicle is currently placed including the information from the direction indicator acquired by the own-vehicle-information acquirer 2a. A scene discriminator 7a may discriminate the position of the own vehicle as the vicinity of an intersection using, for example, information from the direction indicator indicating a left turn or a right turn as one parameter. Alternatively, the scene discriminator 7a may determine on the basis of the information from the direction indicator indicating the left turn or the right turn whether the own vehicle makes a right turn or a left turn and discriminates the position of the own vehicle as the vicinity of the intersection. Therefore, the object detector 1 can be realized in a simple configuration compared with the configuration in which navigation information is used.

The various embodiments are explained above with reference to the drawings. However, it goes without saying that the present disclosure is not limited to such examples. It is evident that those skilled in the art could conceive various alternations or modifications within a category described in the scope of claims. It is understood that the alterations or the modifications naturally belong to the technical scope of the present disclosure. The constituent elements in the embodiments may be optionally combined in a range not departing from the spirit of the disclosure.

In the embodiments, the example is explained in which the present disclosure is configured using hardware. However, the present disclosure can also be realized by software in cooperation with the hardware.

The functional blocks used in the explanation of the embodiments are typically realized as LSIs, which are integrated circuits including input terminals and output terminals. The functional blocks may be individually made into one chip or may be made into one chip including a part or all of the LSIs. The integrated circuit is referred to as LSI. However, the integrated circuit is sometimes called IC, system LSI, super LSI, or ultra LSI according to a difference in an integration degree.

A method of circuit integration is not limited to the LSI and may be realized using a dedicated circuit or a general-purpose processor. An FPGA (Field Programmable Gate Array) programmable after manufacturing of the LSI or a reconfigurable processor capable of reconfiguring connection or setting of circuit cells inside the LSI after manufacturing of the LSI may be used.

Further, if a technique of circuit integration replacing the LSI emerges according to progress of a semiconductor technology or deriving other technologies, naturally, the functional blocks may be integrated using the technique. For example, application of the biotechnology could be a possibility.

The present disclosure is suitable for a monitoring-target-region setting device that can set a detection range in which objects around a vehicle are detected.

Reference Signs List

100, 100a monitoring-target-region setting device
1 object detector
1A left forward radar
1B right forward radar
2, 2a own-vehicle-information acquirer
3 own-vehicle-information storage
4 traveling track calculator
5 traveling state discriminator
6 navigation information acquirer
7, 7a scene discriminator
8 reference time setter
9 monitoring-target-region setter

10 object selector
11 alarm unit

**Claims**

1. A monitoring-target-region setting device comprising:

   an object detector that detects one or more objects present around an own vehicle;
   a discriminator that discriminates, on the basis of position information of the own vehicle accumulated in every determined cycle, whether the own vehicle is located within a determined distance range from an assumed region;
   a monitoring-target-region setter that sets, when the own vehicle is located within the determined distance range, a monitoring target region including the assumed region and being updated according to the position information of the own vehicle; and
   an object selector that selects, whether the one or more objects detected in the monitoring target region are set as a target for which alarm is performed.

2. The monitoring-target-region setting device according to Claim 1, comprising:

   an own-vehicle-information storage that accumulates own vehicle information, which is information including moving speed and a moving direction of the own vehicle, in the every determined cycle; and
   a reference time setter that sets a reference position and reference time of the own vehicle determined according to the own vehicle information, wherein
   the monitoring-target-region setter calculates a position of the own vehicle on the basis of the own vehicle information in the every determined cycle from the reference time and updates the monitoring target region in the every determined cycle.

3. The monitoring-target-region setting device according to Claim 1, comprising an alarm unit that performs alarm when the detected one or more objects are selected as the target of the alarm.

4. The monitoring-target-region setting device according to Claim 2, wherein
   the determined distance range includes a part of an intersection of a crossroads where a right turning car opposed to the own vehicle is present and the own vehicle is waiting for a right turn, and
   the assumed region in the intersection of the crossroads includes a region where a sight of a driver of the own vehicle is blocked by the right turning car opposed to the own vehicle.

5. The monitoring-target-region setting device according to Claim 4, wherein, in the intersection of the crossroads, the reference time setter sets, as reference time, a cycle before the own vehicle starts a right turn.

6. The monitoring-target-region setting device according to Claim 2, wherein
the determined distance range includes a part of an intersection of a T junction where the own vehicle temporarily stops before the own vehicle makes a right turn or a left turn, and
the assumed region in the intersection of the T junction includes a region at a right turn destination or a left turn destination of the own vehicle.

7. The monitoring-target-region setting device according to Claim 6, wherein the reference time setter sets, as the reference time, a cycle when the own vehicle temporarily stops in the intersection of the T junction.

8. A monitoring-target-region setting method comprising:

detecting one or more objects present around an own vehicle;
discriminating, on the basis of position information of the own vehicle accumulated in every determined cycle, whether the own vehicle is located within a determined distance range from an assumed region;
setting, when the own vehicle is located within the determined distance range, a monitoring target region including the assumed region and being updated according to the position information of the own vehicle; and
selecting, whether the one or more objects detected in the monitoring target region are set as a target for which alarm is performed.

# FIG. 1

EP 3 296 762 A1

100

# FIG. 2

OBJECT DETECTION REGION OF
LEFT FORWARD RADAR 10A

OBJECT DETECTION REGION OF
RIGHT FORWARD RADAR 10B

# FIG. 3

(a)

MONITORING REGION

ASSUMED BLIND SPOT REGION

OBJECT DETECTION REGION OF
ANTEROLATERAL 10A

OBJECT DETECTION REGION OF
ANTEROLATERAL 10B

(b)

MONITORING REGION

ASSUMED BLIND SPOT REGION

OBJECT DETECTION REGION OF
ANTEROLATERAL 10A

OBJECT DETECTION REGION OF
ANTEROLATERAL 10B

EP 3 296 762 A1

# FIG. 4

...

# FIG. 5

MONITORING REGION

ASSUMED BLIND SPOT REGION

OBJECT A

OBJECT DETECTION
REGION OF LEFT
FORWARD RADAR 1A

OBJECT DETECTION
REGION OF RIGHT
FORWARD RADAR 1B

OBJECTS B, C

FIG. 6

```
                    ┌─────────────┐
                    │    START    │
                    └──────┬──────┘
                           │
                           ○◄──────────────────────────────┐
                           │                               │
         ┌─────────────────▼─────────────────┐ S1          │
         │   ACQUIRE OWN VEHICLE INFORMATION  │             │
         └─────────────────┬─────────────────┘             │
                           │                               │
         ┌─────────────────▼─────────────────┐ S2          │
         │      CALCULATE TRAVELING TRACK     │             │
         └─────────────────┬─────────────────┘             │
                           │                               │
         ┌─────────────────▼─────────────────┐ S3          │
         │     ACQUIRE NAVIGATION INFORMATION │             │
         └─────────────────┬─────────────────┘             │
                           │                ┌──────────────────────┐ S9
         ┌─────────────────▼─────────────────┐ S4   │    CLEAR ASSUMED     │
         │         DISCRIMINATE SCENE        │       │ BLIND SPOT REGION AND │
         └─────────────────┬─────────────────┘       │   MONITORING REGION   │
                           │                          └───────────▲──────────┘
                      ╱────▼────╲  S5    no                        │
                    ╱    NEAR     ╲────────────────────────────►○──┤
                    ╲ INTERSECTION?╱                               │
                      ╲────┬────╱                                  │
                           │ yes                                   │
                      ╱────▼────╲  S6                              │
              yes   ╱  REFERENCE  ╲                                │
           ┌──────╱ TIME HAS ALREADY╲                              │
           │      ╲ BEEN EXTRACTED? ╱                              │
           │        ╲────┬────╱                                    │
           │             │ no                                      │
           │   ┌─────────▼─────────────┐ S7                        │
           │   │ REFERENCE TIME SETTING │                          │
           │   │      PROCESSING        │                          │
           │   └─────────┬─────────────┘                           │
           │             │                                         │
           │        ╱────▼────╲  S8    no                          │
           │      ╱ REFERENCE   ╲──────────────────────────────────┘
           │      ╲ TIME IS      ╱
           │      ╲ EXTRACTED?  ╱
           │        ╲────┬────╱
           │             │ yes
           └────────────►○
                         │
         ┌───────────────▼──────────────────┐ S10
         │ MONITORING REGION SETTING PROCESSING│
         └───────────────┬──────────────────┘
                         │
         ┌───────────────▼──────────────────┐ S11
         │  SELECT ALARM CANDIDATE PRESENT    │
         │    IN ASSUMED BLIND SPOT REGION    │
         └───────────────┬──────────────────┘
                         │
         ┌───────────────▼──────────────────┐ S12
         │               ALARM                │
         └───────────────┬──────────────────┘
                         │
                  ┌──────▼──────┐
                  │     END     │
                  └─────────────┘
```

# FIG. 7

```
                          ┌─────────────┐
                          │    START    │
                          └──────┬──────┘
                                 │                    ⟋S21
                    ┌────────────▼─────────────────┐
                    │  EVALUATION FRAME NUMBER =    │
                    │  FRAME NUMBER AT PRESENT TIME │
                    └────────────┬─────────────────┘
```

EP 3 296 762 A1

EVALUATION FRAME NUMBER = FRAME NUMBER AT PRESENT TIME — S21

S22 TURNING? — no → S27 STOPPED? — no

yes

S23 TURNING ANGLE IN EVALUATION FRAME IS ZERO? — yes → S25 OUTPUT REFERENCE FRAME NUMBER

no

S24 SUBTRACT 1 FROM EVALUATION FRAME NUMBER AND ADD 1 TO NUMBER OF TIMES OF DETERMINATION (INITIAL VALUE IS 0)

S26 NUMBER OF TIMES OF DETERMINATION > THRESHOLD? — no / yes

S27 STOPPED? — yes → S28 OUTPUT REFERENCE FRAME NUMBER

END

# FIG. 8

(a)

T = t0

X

ASSUMED BLIND SPOT REGION

$\theta b\_0$

MONITORING TARGET REGION

$\theta a\_0$

Y

(x0, y0)
T = t0

(b)

T = t1

X (VEHICLE FRONT DIRECTION AT T = t1)

$\theta b\_1$

$\theta a\_1$

(x0, y0)

t1

T = t0

Y

Y (VEHICLE DIRECTLY HORIZONTAL DIRECTION AT T = t1)

(c)

T = t2

X

X

(VEHICLE FRONT DIRECTION AT T = t2)

$\theta b\_2$

$\theta a\_2$

(x0, y0)

t2

t1

Y

Y (VEHICLE DIRECTLY HORIZONTAL DIRECTION AT T = t2)

EP 3 296 762 A1

FIG. 9

EP 3 296 762 A1

# FIG. 10

START

S31
REGISTERED
FRAME IS PRESENT?

no — S32
EVALUATION FRAME NUMBER =
REFERENCE FRAME NUMBER + 1

yes — S33
EVALUATION FRAME NUMBER =
REGISTERED FRAME NUMBER + 1

S34
EVALUATION
FRAME NUMBER =
PRESENT FRAME
NUMBER + 1?

yes

no

S35
CALCULATE MONITORING REGION ANGLE
RANGE OF EVALUATION FRAME NUMBER

S36
UPDATE MONITORING REGION ANGLE
RANGE OF REGISTERED FRAME NUMBER

S37
ADD 1 TO EVALUATION FRAME NUMBER

S38
OUTPUT MONITORING REGION
INFORMATION IN PRESENT FRAME

END

# FIG. 11

## INTERNATIONAL SEARCH REPORT

| International application No. |
| --- |
| PCT/JP2016/002138 |

**A. CLASSIFICATION OF SUBJECT MATTER**
*G01S13/93*(2006.01)i, *B60R21/00*(2006.01)i, *G08G1/16*(2006.01)i

According to International Patent Classification (IPC) or to both national classification and IPC

**B. FIELDS SEARCHED**

Minimum documentation searched (classification system followed by classification symbols)
G01S13/93, B60R21/00, G08G1/16

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | US 2008/0300733 A1 (Bayerische Motoren Werke AG),<br>04 December 2008 (04.12.2008),<br>paragraphs [0006] to [0052]; fig. 1 to 2<br>& WO 2007/093299 A1 & DE 102006006850 A1<br>& CN 101374691 A | 1-3,6-8<br>4-5 |
| Y | JP 2015-82157 A (Mitsubishi Electric Corp.),<br>27 April 2015 (27.04.2015),<br>fig. 5<br>(Family: none) | 4-5 |
| Y | JP 2004-46426 A (Honda Motor Co., Ltd.),<br>12 February 2004 (12.02.2004),<br>fig. 9<br>(Family: none) | 4-5 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 14 July 2016 (14.07.16) | 26 July 2016 (26.07.16) |

| Name and mailing address of the ISA/<br>Japan Patent Office<br>3-4-3,Kasumigaseki,Chiyoda-ku,<br>Tokyo 100-8915,Japan | Authorized officer |
| | Telephone No. |

Form PCT/ISA/210 (second sheet) (January 2015)

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2009058316 A